(19) Europäisches Patentamt
European Patent Office
Office européen des brevets

(11) **EP 2 466 901 B1**

(12) **EUROPEAN PATENT SPECIFICATION**

(45) Date of publication and mention
of the grant of the patent:
**14.06.2017 Bulletin 2017/24**

(51) Int Cl.:
**H04N 13/00** $^{(2006.01)}$

(21) Application number: **11191976.7**

(22) Date of filing: **05.12.2011**

(54) **Depth data upsampling**

Tiefendaten-Upsampling

Échantillonnage de données de profondeur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2010 TR 201010439**

(43) Date of publication of application:
**20.06.2012 Bulletin 2012/25**

(73) Proprietor: **Vestel Elektronik Sanayi ve Ticaret A.S.
45030 Manisa (TR)**

(72) Inventor: **Cigla, Cevahir
06531 Ankara (TR)**

(74) Representative: **Cayli, Hülya
Paragon Consultancy Inc.
Koza Sokak No: 63/2
GOP
06540 Ankara (TR)**

(56) References cited:
**US-A1- 2010 110 070**

• **WAN-YU CHEN ET AL: "Efficient Depth Image
Based Rendering with Edge Dependent Depth
Filter and Interpolation", IEEE INTERNATIONAL
CONFERENCE ON MULTIMEDIA AND EXPO,
ICME 2005, 6 July 2005 (2005-07-06), pages
1314-1317, XP010843908, DOI:
10.1109/ICME.2005.1521671 ISBN:
978-0-7803-9331-8**
• **SCHUON S ET AL: "High-quality scanning using
time-of-flight depth superresolution",
COMPUTER VISION AND PATTERN
RECOGNITION WORKSHOPS, CVPR 2008., 23
June 2008 (2008-06-23), pages 1-7, XP031285727,
ISBN: 978-1-4244-2339-2**
• **QINGXIONG YANG ET AL: "Spatial-Depth Super
Resolution for Range Images", IEEE
CONFERENCE ON COMPUTER VISION AND
PATTERN RECOGNITION, CVPR '07, 18 June
2007 (2007-06-18), pages 1-8, XP031114468,
ISBN: 978-1-4244-1179-5**

## Description

### Technical Field

The present invention provides a method and a device for processing three dimensional image data by up-sampling a depth map of stereo content, such as in particular a video sequence of digital stereo video, digital stereo images, scanned film print stereo frames through a broadcast live system in real time or through a storage medium such as a hard-disk, scanner, optical disk or the like.

### Prior Art

Disparity map estimation is one of the fundamental and most important tools for stereo (multi-view) image processing. As 3D TVs become available in the market, the focus on stereo processing has also gained attention. In that manner, disparity map estimation which gives information about the 3D position of the objects or pixels in the stereo (multi-view) content is inevitable. In literature there are various methods providing disparity maps from 3D content involving stereo or multi-view video. However, considering the resolution of the 3D content provided by 3D TVs, the computational complexity is very high for providing reliable disparity maps. In literature, real time disparity map estimation algorithms (on embedded systems) run on resolutions around (300x200) which are far away from the HD panel resolutions (1920x1080). It is clear that, performing known disparity estimation algorithms on high resolution data do not enable real time applications.

Prior art document US2010110070 A1 discloses a three-dimensional image generator by scaling a depth map, the scaling is performed by applying a cross filter to sharpen a blurred region on the depth map based on location information of the depth map and the corresponding two dimensional image.

In prior art document U.S. 2008/0267494 A1, a joint bilateral up-sampler is disclosed which uses a high resolution input signal to guide the interpolation of a low resolution solution set derived from a down-sampled version of the input signal from low to high resolution. However, the bilateral filters are window-based filters whose weight depends on the colour similarities and the spatial distances between the centre pixel and the corresponding pixels within a window. Thus, pixels with similar colour coefficients have higher weights, whereas dissimilar pixels have lower weights. The weights are determined by colour images and exploited to filter and up scale disparity maps. The weighting strategy of bilateral filters provides intensity edges to be preserved, hence the up sampled disparity map involves depth discontinuities at edge regions and smooth variation at un-textured regions. Bilateral filters provide high precision up sampling of low resolution data such as disparity maps, tone mapping. As given in equation (A), once the weights are determined, the information is obtained from the low resolution data by weighted summation within a window ($N$, $N$).

$$D(x, y) = \frac{1}{Wsum} \sum_{j \in N} \sum_{i \in N} w(I(x+i, y+j)) d(x_\downarrow, y_\downarrow)$$

(A)

In (A), $x_\downarrow$ and $y_\downarrow$ correspond to pixels coordinates of $x$ and $y$ at low resolution disparity map, d is the low resolution disparity map, $D$ is the high resolution disparity map, $w()$ is the weighting function depending on colour similarity and on spatial distance, $Wsum$ is the normalization coefficient yielding the sum of all weights to "1". In order to obtain satisfying up sampling, the size of the filter should be as large as possible.

However, it is a drawback of bilateral depth up-sampling that it is assumed that intensity edges also involve depth discontinuities which is called texture copying. In some cases, the intensity edges may not coincide with depth discontinuities and involve smooth depth variations. However, bilateral filters do not smooth the disparity map at these regions leading to an incorrect up-scaling. A further disadvantage of bilateral filters is the computational complexity. The distribution of weights in the filter window change for each pixel, hence pixels do not have strict relations with neighbouring pixels. Therefore, as the window sizes increase, which is directly related to the up-scaling ratio, the computational complexity is increased tremendously. It is a further disadvantage of bilateral filters that the support window may not be connected, which is depending on the colour similarity and spatial distance, wherein there may be gaps between support pixels leading to discontinuities. This fact leads thereto that similar colour pixels on different objects are in the same support regions as the filter size increases, which leads to an incorrect upsampling.

### Brief Description of the Invention

This object is solved by a method according to claim 1 of this invention.

Further, the above object of the invention is solved by a device according to claim 5.

The dependent claims of this invention refer to specific embodiments, wherein those embodiments can be combined in view of the following description, which is obvious for a skilled person.

Up-sampling of low resolution depth maps obtained through stereo estimation or active sensors, according to the observed high resolution colour images is an important tool for reducing computation complexity of stereo processing of three-dimensional data and providing high resolution depth data coinciding with high resolution colour images of the same scene.

The fundamental approach for the solution of the up-scaling of low resolution disparity or depth maps is performing filtering among the nearest neighbour up-scaled disparity map by utilizing adaptive support windows detected through processing of high resolution colour images. The adaptive support windows are determined by detecting vertical and horizontal bounds for each pixel having an intensity range within a threshold. Then, for each pixel, averaging of the disparity values among the detected bounds of the neighbouring pixels located within the bounds of the corresponding pixel is performed. In order to save computation and be independent of the support window size, summed area table of the nearest neighbour up-scaled disparity map is utilized, which enables averaging on horizontal or vertical direction with one subtraction. The vertical and horizontal bounds determine the shape of the adaptive window based on intensity (colour) variation, in that manner color-wise similar pixels are utilized to obtain the high resolution disparity map. The adaptive support windows also provide continuous and compact regions during the disparity averaging, which is vital for ignoring unrelated pixels

## Object of the Invention

Due to the above, it is the object of the present invention to provide a method and a device for up-sampling a depth map for a stereo content which reduce the computational complexity and achieve a precise high-resolution depth map.

## Brief Description of the Drawings

In the drawings, wherein like reference numbers denote similar elements throughout the views:

Figure 1 is a flowchart of the up-scaling of the low resolution disparity maps to high resolution colour images of a scene according to the invention;

Figure 2 shows the horizontal and vertical intensity bounds of a pixel;

Figure 3 shows the utilization of neighbouring bounds to reduce computation complexity during the bound search of a pixel;

Figure 4 shows the corresponding arbitrary support region extracted by the horizontal and vertical bounds;

Figure 5 shows integral data of a two dimensional data of a disparity map;

Figure 6 shows a two pass algorithm for calculating total disparity values among an arbitrary shaped region by the utilization of integral data, a first horizontal summation and then vertical summation over integral data according to the invention; and

Figure 7 is an embodiment of a device for up-sampling low-resolution depth data according to the present invention.

The reference numbers as used in figures may possess the following meanings;

| | |
|---|---|
| Nearest neighbour up sample | (10) |
| Bound detection | (20) |
| Adaptive support region filtering | (30) |
| 3D content supplier | (101) |
| 3D processing unit | (102) |
| Depth estimator unit | (103) |
| Stereo matching unit | (104) |
| Up sampler | (105) |
| Depth based processing unit | (106) |

(continued)

| Down sampler | (107) |
| --- | --- |

## Detailed Description of the Invention

Hereinafter, the embodiments of the present invention will be described in detail with reference to the attached drawings. The present invention is not restricted to the following embodiments and many variations are possible within the scope of the present invention. The embodiments of the present invention are provided in order to more completely explain examples of the present invention to a person skilled in the art.

It has to be mentioned that stereo content can be present in various formats and can be supplied through various sources, which can provide video scenes of digital stereo video, digital stereo images, scanned film print stereo frames through a broadcast live system in real time or storage medium such as a hard-disk, scanner, optical disk or the like.

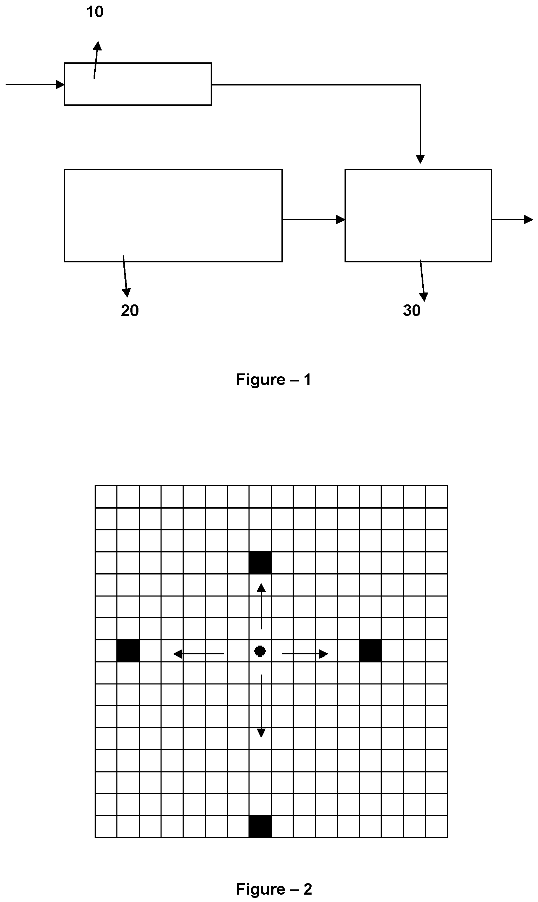

With respect to Figures 1 to 6, a method of up-sampling low-resolution depth data according to the invention is explained, wherein the low-resolution depth data can be in the form of a disparity map obtained through stereo image processing or in the form of a range map obtained by active sensors. According to the principle of the invention, the low-resolution depth data are combined with corresponding high-resolution colour data of the same scene to provide high-resolution depth data with improved precision achieved by the depth data up-sampling according to the invention. Thus, the high-resolution depth map received by the method of depth data up-sampling according to the invention can be used for virtual view synthesis, depth-based enhancement or related 3D applications for 3D televisions or similar 3D applications in computers, beamers or the like for viewing 3D movies or other 3D content by consumers.

When the low-resolution depth data are in form of a disparity map, the estimated disparity map is self-registered with one of the stereo images. When the low-resolution depth data is in the form of a range map, however, a registration is required between colour data and depth data, which can be achieved by homograph mapping. According to the invention it is assumed that the depth data and the colour data are registered.

Figure 1 shows the method according to the present invention of up-sampling low-resolution disparity depth maps by exploiting high-resolution colour images of the same scene in two steps. In particular, in a first procedure the low-resolution disparity map is up-sampled using a nearest neighbour-interpolation (10). In the second procedure, the high resolution colour image of the same scene as with respect to the first procedure is used to detect the vertical and horizontal bounds (20), which will be explained in more detail. Once the vertical and horizontal bounds are determined, an averaging filter is applied among the arbitrary shaped region by the utilization of horizontal and vertical integral data of the disparity map so that adaptive support region filtering (30) leads to the high-resolution disparity map.

In particular, the second procedure involves detecting of adaptive shaped regions for each pixel defining colour-wise similar pixel groups in the high-resolution colour image which is achieved by vertical and horizontal bound search which limits the colour variation within. During bound search, neighbouring pixel bounds are necessary to decrease the computational complexity. Once the vertical and horizontal bounds are determined, the averaging filter is applied among the arbitrary shaped region by the utilization of horizontal and vertical integral data of the disparity map, wherein integral data enable the fast computation which is independent from an increase in window sizes. The averaging operation within colour-wise similar pixel groups provide crisp, especially at object boundaries, and smooth high-resolution depth data wherein erroneous regions are also corrected in some manner.

It is the advantage of the method according to the invention in view of the known joint bilateral up-sampling algorithms that the computational complexity can be reduced by utilization of summed area tables wherein a higher precision is achieved at object boundaries due to connected support regions.

In the following, the present invention is explained in more detail with respect to Figures 2 to 6.

It is a further disadvantage of the prior art that during up-sampling of low resolution disparity maps by fixed coefficient filters, such as bicubic and bilinear, the disparity edges do not correspond to colour edges, which causes artifacts at object boundaries and does not provide correction of wrong disparity assignments. However, the up sampling should preserve edge information as well as smooth disparity map at un-textured regions, providing disparity correction. In that manner, the present invention first up scales the low resolution disparity map to the original high resolution image size by the widely utilized nearest neighbour interpolation, as given in equation (B). In (B), *HighDisp* and *LowDisp* correspond to high and low resolution disparity maps, $s_H$ and $s_V$ correspond to the horizontal and vertical scaling factor between two resolutions. The disparity values are also scaled by the horizontal scaling factor, since disparity is defined among horizontal axis and is directly related to the width of the stereo frames.

$$HighDisp(x, y) = s_H . LowDisp(x / s_H, y / s_V) \qquad (B)$$

The scaling in equation (B) is unsuitable to provide high precision up sampled disparity map. Therefore, adaptive support region filtering operation is performed to refine the disparity map. According to an adaptive support region the idea can be used to estimate disparity maps between stereo pairs.

However, the present invention exploits the adaptive support region idea for up sampling and smoothing low resolution disparity maps according to the high resolution colour image rather than stereo disparity map estimation. Disparity cost values can be aggregated among support regions and the disparity values providing minimum cost is assigned to the pixels. In the present invention, adaptive support region is utilized to filter disparity maps. Adaptive support region for each pixel is determined by detecting vertical and horizontal intensity bounds in the high resolution colour image.

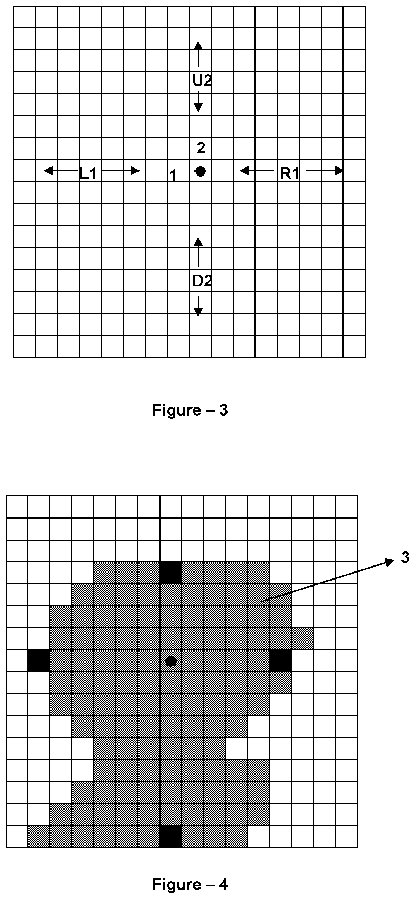

As given in figure 2, for each pixel a search is performed in four directions (up, down, left and right) to determine the colour wise neighbourhood. In any direction, the search continues until the first pixel whose absolute intensity difference with the centre pixel is above a predetermined threshold is reached, which actually forms the bound in the corresponding direction. Hence, for each pixel four bounds in four directions are determined which define colour wise similar pixel region bounds. This search can be performed for each pixel independently which actually increases computation complexity as the search width increases. However, according to this invention, bound detection is performed in a computationally efficient way by enforcing bounds of the neighbouring pixels during the search for a pixel. As illustrated in figure 3, before the bound detection of a pixel, the bounds of left (indexed as *1*) and upper (indexed as *2*) neighbour pixels have been detected in the scan order. The horizontal bound search of the pixel (black circled) starts form the left ($L_1$) and right ($R_1$) bounds of the left neighbouring pixel, if the intensity difference of $L_1$ with the corresponding pixel is below (above) the predefined threshold, search continues in left (right) direction; if the intensity difference of $R_1$ and the centre pixel is below (above) the threshold, search continues in right (left) direction. The same procedure is also followed during the vertical bound detection as well; the bound search in upward direction starts from the upper bound ($U_2$) of the upper neighbouring pixel and the direction is determined according to the intensity difference between $U_2$ and the centre pixel. If the difference is below (above) the threshold, search continues in upward (downward) direction. The bound search in downward direction starts from the lower bound ($D_2$) of the upper neighbouring pixel and the search direction is determined based on the intensity difference. If the absolute difference is below (above) the threshold, search is conducted in downward (upward) direction. Utilization of the bounds of the neighbouring pixels provides a decrease in the search range, which actually saves almost 50% of the computation of the bound search. The idea in this search is logical, since similar coloured neighbouring pixels have close bounds, hence unnecessary search is prevented.

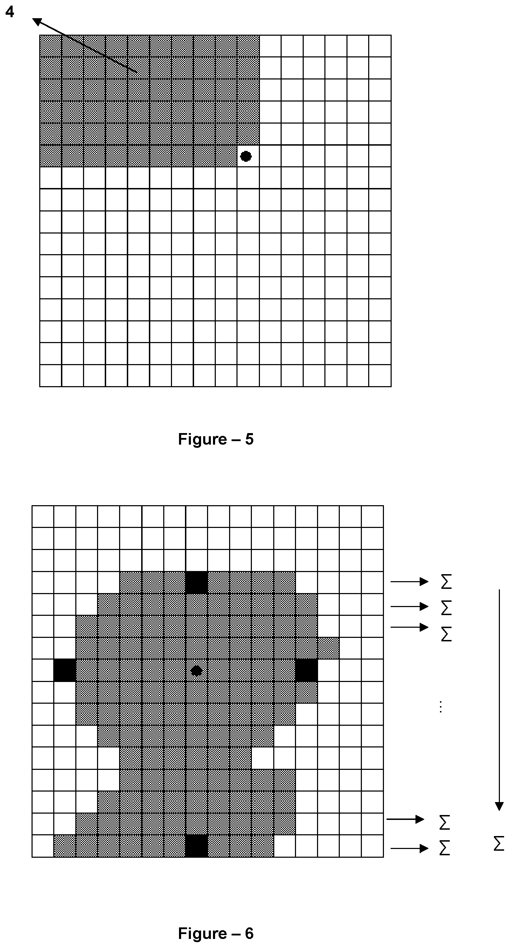

Once the bounds for each pixel in the high resolution colour image are determined (upper bound UB, lower bound DB, left bound LB and right bound RB), the next step involves averaging of disparity values by exploiting the bounds and the disparity maps. The adaptive support region for a pixel is extracted by considering horizontal bounds of the pixels in the vertical bound of the corresponding pixel as illustrated in figure 4. This region (3) defines the locally similar coloured pixels around the pixel in an efficient way, and the next step involves an averaging operation of the disparity values within the support region. It is important to note that, calculating the average disparity value among the support region for each pixel requires lots of computation, and as the support region sizes increase, such a process becomes inefficient. Therefore, summed area tables are utilized to perform averaging efficiently and be independent of the region size. Summed area tables or integral images are vital tools for efficient box filtering, whose coefficients are all same i.e., averaging filters. Integral image of an image is obtained by equation (C), where each pixel value involves the sum of the values before that pixel as illustrated in figure 5, the sum of the pixels (4).

$$Integral(x, y) = \sum_{i=1}^{x} \sum_{j=1}^{y} I(i, j) \tag{C}$$

Once the integral image is calculated, the average values within a box (rectangle) window can be calculate the following operation (equation D) independent of the window size.

$$AverageVal(x) = \frac{Integral(p4) + Integral(p1) - Integral(p2) - Integral(p3)}{TotalArea} \tag{D}$$

The same idea can be exploited for arbitrary support region averaging by orthogonal horizontal and vertical integral images, which actually involve two 1D integration instead of one 2D integration. In that manner, initially the horizontal integral image of the nearest neighbour up scaled disparity map is constructed (equation E), where each row is treated independently and the integral is evaluated among consecutive columns.

$$HorInt(x, y) = \sum_{i=0}^{..} HighDisp(i, y) \qquad \text{(E)}$$

Horizontal integral image of the disparity map can be utilized to determine the sum of disparity values within a closed horizontal bound easily (equation F), hence for each row illustrated in figure 6 the total disparity value among horizontal bounds are calculated (horizontal gray coloured pixels) and the total disparity value is determined by summation of these values in vertical direction starting from pixel a to pixel $b$ as given in equation (G).

$$HSum(x, y) = HorInt(RB(x, y), y) - HorInt(LB(x, y), y) \qquad \text{(F)}$$

$$Sum(x, y) = \sum_{i=UB(x,y)}^{DB(x,y)} HSum(x, i) \qquad \text{(G)}$$

The vertical summation given in equation (G) can be achieved by integral data as well in order to decrease computational complexity. In that manner, the vertical integral data of the horizontal sum data is obtained via (H),

$$VerInt(x, y) = \sum_{i=0}^{y} Hsum(x, i) \qquad \text{(H)}$$

and the total disparity value within the support region is obtained through one subtraction among the vertical integral data as given in equation (I). Thus, the computational complexity does not depend on the length of the vertical bounds, which enables the utilization of larger neighbourhood increasing the robustness and precision.

$$Sum(x, y) = VerInt(x, DB(x, y)) - VerInt(x, UB(x, y)) \qquad \text{(I)}$$

The utilization of vertical and horizontal integral data provides the computation complexity of the averaging filter to be independent of the adaptive region width; in that manner the horizontal and vertical search width could be chosen as large as possible.

The average disparity value within the adaptive support region is finally calculated by normalizing the total sum with the number of pixels in the region, which is also determined by summing up the width of the horizontal bounds of the pixels located among the vertical bounds of the corresponding pixel, as in equation (J).

$$Area(x, y) = \sum_{i=DB(x,y)}^{UB(x,y)} \left| RB(x, i) - LB(x, i) \right| \qquad \text{(J)}$$

As in the summation of total disparity values within an arbitrary region, vertical and horizontal integral data can be utilized to calculate the area of the arbitrary region for each pixel instead of equation J, which turns out to be computationally burden as the region size increases. In that manner, initially assigning column indexes to the count data (*InitCount*) forming the horizontal integral data, the horizontal width for each pixel can be calculated by utilizing the horizontal bounds as:

$$InitCount(x, y) = x + 1 \qquad x \in (0, width); \; y \in (0, height)$$
$$HorCount(x, y) = InitCount(RB(x, y), y) - InitCount(LB(x, y), y) \qquad \text{(K)}$$

In equation (K), *HorCount* gives the width of horizontal bounds for each pixel; in order to calculate the total number of pixels, vertical summation is also required. Hence, vertical integral data is obtained from the horizontal integral data as follows in equation (L):

$$VerCount(x,y) = \sum_{i=0}^{y} HorCount(x,i) \qquad (L)$$

Finally, total number of pixels can be found by equation (M) whose computational complexity is insensitive to the area unlike the solution given in equation (1J).

$$Area(x,y) = VerCount(x,DB(x,y)) - VerCount(x,UB(x,y)) \qquad (M)$$

Disparity assignment is achieved by normalizing the sum of disparity values by the arbitrary region area as in equation N

$$DispMap(x,y) = \frac{Sum(x,y)}{Area(x,y)} \qquad (N)$$

It is important to note that, the proposed up sampling method exploits averaging filter among arbitrarily shaped local windows by vertical and horizontal passes. The utilization of summed area tables (integral data) provides the independency of the algorithm to the area of the support region. In that manner, the proposed method is much faster than edge preserving joint bilateral up sampling, which is actually a widely utilized algorithm. Moreover, during the detection of region bounds utilizing neighbouring relations between pixels tremendously decreases computational complexity of the algorithm. The presented invention provides connected support regions for each pixel, having a compact relation which is not the case in bilateral up-sampling and increasing precision.

In the following, an embodiment is described, wherein the method of the invention is a combination of eight steps.

Step 1: Up scale the low resolution input depth map to the desired resolution by nearest neighbour interpolation.

Step 2: Detect the horizontal and vertical bounds of each pixel on the high resolution colour image depending on the intensity differences. In order to decrease computation complexity, exploit bounds of neighbouring pixels to start the bound search. Thus, right bound *RB*, left bound *LB*, upper bound *UB* and lower bound DB are detected for each pixel.

Step 3: Obtain the horizontal integral disparity map by utilizing the following formula (E) for each row independently.

$$HorInt(x,y) = \sum_{i=0}^{x} Disp(i,y) \qquad (E)$$

Step 4: For each pixel, calculate the sum of disparity values among horizontal direction by utilizing the horizontal integral image and the horizontal (left and right LB, RB) bounds.

$$HSum(x,y) = HorInt(RB(x,y),y) - HorInt(LB(x,y),y) \quad (F)$$

Step 5: Obtain the vertical integral of the horizontally summed disparity map by integrating over each column independently.

$$VerInt(x,y) = \sum_{i=0}^{y} Hsum(x,i) \qquad \text{(H)}$$

Step 6: For each pixel, calculate the total disparity values among the arbitrary support region by one subtraction of lower and upper bounds over the vertical integral data extracted in step 5.

$$Sum(x,y) = VerInt(x,DB(x,y)) - VerInt(x,UB(x,y)) \quad \text{(I)}$$

Step 7: Calculate the total area of the arbitrary support region for each pixel by vertical and horizontal integral data. First, form the horizontal integral, and calculate horizontal bound widths for each pixel; then form the vertical integral data of the horizontal bounds.
Finally, calculate the vertical summation of the horizontal width data by utilizing the vertical bounds, which gives the area of the arbitrary regions for each pixel.

$$InitCount(x,y) = x+1 \qquad x \in (0,width); \; y \in (0,height)$$
$$HorCount(x,y) = InitCount(RB(x,y),y) - InitCount(LB(x,y),y) \qquad \text{(K)}$$

$$VerCount(x,y) = \sum_{i=0}^{y} HorCount(x,i) \qquad \text{(L)}$$

$$Area(x,y) = VerCount(x,DB(x,y)) - VerCount(x,UB(x,y)) \qquad \text{(M)}$$

Step 8: The final disparity value for each pixel is obtained by normalizing the sum value determined in step 6 by support area calculated in step 7.

$$DispMap(x,y) = \frac{Sum(x,y)}{Area(x,y)} \qquad \text{(N)}$$

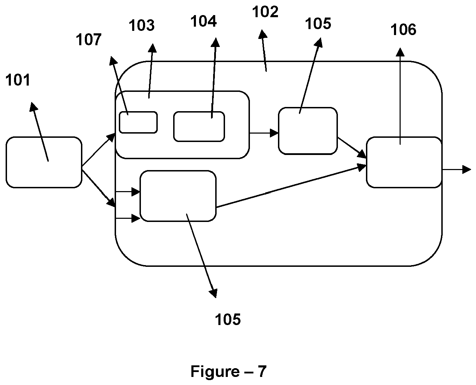

With respect to Figure 7, a depth data up-sampler device is explained in the following.

Depth Data Upsampler is a device that increases the resolution of depth data depending on the high resolution colour image. Depth data correspond to 3D structure that can be obtained through a stereo (multi-view) depth estimator or active sensors (IR or laser) that exploit time-of-flight. Thus, the 3D content supplier (101) provides digital stereo (multi-view) video, images, scanned film print stereo (multi-view) frames or colour and its measured low resolution depth data to a 3D processing unit (102). The 3D stereo or multi-view content can be provided through a broadcast live system, or from a stored medium, wherein the colour plus depth can be provided through an active sensor involving IR or laser transmitter and receiver capturing depth data and a camera capturing colour data.

The 3D processing unit (102) is a device that exploits 3D data for several applications, in that manner the unit (102) can be a part of a 3D TV system, a computer specialised for 3D applications or a processor embedded on active sensors to provide processed depth data.

Depending on the type of the input data, 3D processing unit (102) may involve a depth estimator unit (103) for stereo or multi-view content, involves a depth upsampler unit (105) and a depth based processing unit (106). For stereo or multi-view content, depth data is required to be extracted; in that manner, depth estimator unit (103) is specialised for estimating 3D structure. In depth estimator unit (103), a down sampler unit (107) is required to decrease the resolution of the input data so that fast processing can be achieved especially for real-time systems of 3D TVs. The downsampling shrinks the number of depth hypotheses and number of pixels in the images, enabling low computational complexity. This unit is followed by a stereo (multi-view) depth estimator or matching unit (104) that extracts 3D structure by pixel matching. Exploiting down sampled data, the output of depth estimator (104) is low resolution depth map(s) of stereo or multi-view frames. In most cases, low resolution depth data is required to be up sampled especially for depth based applications in 3D TVs and computers. The depth data provided from active sensors is also low resolution and up sampling is vital for various applications such as virtual view synthesis. The invention refers in particular to a depth up-sampling device (105) and the corresponding method, which are important for 3D processing units in almost every application. Depth up-sampling device (105) gets two inputs, low resolution depth data and the corresponding high resolution colour view. For stereo or multi-view case, depth data can belong to any of the views and its colour data is available; for the colour plus depth case, both are provided through a capturing device or 3D content supplier (101). Depth up-sampling device (105) outputs high resolution depth data for the corresponding high resolution colour view by following the steps explained in Figure 1. The high resolution depth data can be used by another unit in the 3D processing unit (102). The depth-based processing unit (106) is a module performing any depth driven application involving virtual view synthesis, on scene display embedding, depth based enhancement. Depending on the type of the 3D processing unit, depth-based processing unit (106) may show variation. For example, for 3D TVs, depth-based processing unit (106) may involve adaptive depth adjustment via virtual view synthesis or depth based enhancement. For a computer providing high resolution depth data may be sufficient or virtual tour within the 3D content can be achieved by virtual view synthesis. For an embedded processor on an active sensor, providing high resolution depth data can be sufficient.

In summary, the present invention provides a method and a device for up-sampling low resolution depth data of a video sequence to higher resolution. In particular, the invention provides the ability for systems estimating depth maps to process at lower resolutions so that the computational complexity is reduced wherein the estimated depth maps are up-sampled to the original video resolution. In addition, the registration of low resolution depth information gathered from active sensors to high resolution colour image is also provided.

The up-sampling method according to the invention is basically achieved by up-scaling low resolution depth data to the desired resolution via well known nearest neighbour interpolation which do not preserve colour and depth edges. The method of the invention further involves detection of adaptive shaped regions for each pixel defining colour wise similar pixel groups in the high resolution colour image, which is achieved by vertical and horizontal bound search which limits the colour variation within. During bound search, neighbouring pixel bounds are constrained in order to decrease computational complexity. Once the vertical and horizontal bounds are determined, an averaging filter is applied among the arbitrary shaped region by the utilization of horizontal and vertical integral data of the disparity map. Integral data enable fast computation insensitive to increase in window sizes. The averaging operation within colour wise similar pixel groups provide crisp, especially at object boundaries, and smooth high resolution depth data, where erroneous regions are also corrected in some manner. The advantage of the proposed method over well known joint bilateral up sampling algorithm is the lower computational complexity by the utilization of summed area tables and higher precision at object boundaries due to connected support region. The invention can be extended to extraction of depth (disparity) for videos captured through multiple cameras in addition to stereo by analysing images in a pair-wise fashion.

## Claims

1. Method of processing three-dimensional image data by up-sampling low resolution depth data, wherein said depth data is registered to a colour data of a high resolution colour image by homograph mapping, comprising the following successive steps:

    - up-scaling the low resolution depth data to resolution of said high resolution colour image using a nearest neighbour interpolation (10) to obtain an up-scaled disparity map,
    - detecting the horizontal and vertical bounds for each pixel of said high resolution colour image (20) based on intensity differences, wherein in said detection, a search is performed for each pixel in four directions and said search continues until a first pixel which defines said horizontal or vertical bound in corresponding direction and whose absolute intensity difference with the centre pixel is above a predetermined threshold is reached,
    - combining the up-scaled disparity map and the detected vertical and horizontal bounds (30) by applying an averaging filter among an arbitrary shaped region which is determined by vertical and horizontal bound search which limits the colour variation within the predetermined threshold, by the utilization of horizontal and vertical integral data of the up-scaled disparity map to obtain a high resolution disparity map, wherein said averaging filter performs a filtering among the nearest neighbour up-scaled disparity map by utilizing adaptive support windows detected through processing of the high resolution colour images, wherein the adaptive support windows are determined by detecting the vertical and horizontal bounds for each pixel, wherein then for each pixel the averaging of the disparity values among the detected bounds of the neighbouring pixels located within the bounds of the corresponding pixels is performed.

2. Method according to claim 1, **characterized in that** the averaging of the disparity values is performed by the utilization of summed area tables of the nearest neighbour up-scaled disparity map in horizontal and vertical direction.

3. Method according to one of the preceding claims, wherein the horizontal integral image of the nearest neighbour up-scaled disparity map is calculated by the equation

$$HorInt(x, y) = \sum_{i=0}^{x} HighDisp(i, y)$$

wherein each row is treated independently and the integral is evaluated among consecutive columns, and wherein for each pixel the sum of disparity values in horizontal direction is calculated by utilizing the horizontal integral image and the horizontal bounds according to the following equation:

$$HSum(x, y) = HorInt(RB(x, y), y) - HorInt(LB(x, y), y)$$

wherein LB are left bounds and RB are right bounds.

4. Method according to one of the preceding claims, wherein the vertical integral of the horizontally summed disparity map is obtained by integrating over each column independently by the following equation:

$$VerInt(x, y) = \sum_{i=0}^{y} Hsum(x, i)$$

wherein the total disparity values are calculated for each pixel among the arbitrary support region by a subtraction of lower and upper bounds over the vertical integral data resulting in Sum(x,y),
wherein the total area of the arbitrary shaped support region for each pixel Area(x,y) is calculated by vertical and horizontal integral data, and wherein the final disparity value for each pixel is calculated by normalising the sum value Sum(x,y) by the support area Area(x,y) by the equation

$$Disp(x, y) = \frac{Sum(x, y)}{Area(x, y)}$$

5. Device for processing three-dimensional image data by up-sampling low resolution depth data, wherein said depth data is registered to a colour data of a high resolution colour image by homograph mapping, comprising

- a depth estimator unit (103) which provides the low resolution depth data,
- a depth up-sampling unit (105) which combines the low resolution depth data of the depth estimator unit (103) and corresponding high resolution colour data to process a high resolution disparity map, wherein the low resolution depth data are up-scaled to resolution of said high resolution colour image using a nearest neighbour interpolation to obtain an up-scaled disparity map,

wherein the horizontal and vertical bounds for each pixel of a high resolution colour image based on intensity differences are detected, wherein in said detection, a search is performed for each pixel in four directions and said search continues until a first pixel which defines said horizontal or vertical bound in corresponding direction and whose absolute intensity difference with the centre pixel is above a predetermined threshold is reached, wherein the low resolution depth data correspond to the high resolution colour image, and wherein the up-scaled disparity map and the detected vertical and horizontal bounds are combined by applying an averaging filter among an arbitrary shaped region which is determined by vertical and horizontal bound search which limits the colour variation within the predetermined threshold, by the utilization of horizontal and vertical integral data of the up-scaled disparity map to obtain the high resolution disparity map, wherein the averaging filter performs a filtering among the nearest neighbour up-scaled disparity map by utilizing adaptive support windows detected through processing of the high resolution colour images, wherein the adaptive support windows are determined by detecting the vertical and horizontal bounds for each pixel, wherein then for each pixel the averaging of the disparity values among the detected bounds of the neighbouring pixels located within the bounds of the corresponding pixels is performed.

6. Device according to claim 5, **characterized in that** the averaging of the disparity values is performed by the utilization of summed area tables of the nearest neighbour up-scaled disparity map in horizontal and vertical direction.

7. Device according to any of claims 5 or 6, wherein the horizontal integral image of the nearest neighbour up-scaled disparity map is calculated by the equation

$$HorInt(x, y) = \sum_{i=0}^{x} HighDisp(i, y)$$

wherein each row is treated independently and the integral is evaluated among consecutive columns, and wherein for each pixel the sum of disparity values in horizontal direction is calculated by utilizing the horizontal integral image and the horizontal bounds according to the following equation:

$$HSum(x, y) = HorInt(RB(x, y), y) - HorInt(LB(x, y), y)$$

wherein LB are left bounds and RB are right bounds.

8. Device according to any of claims 5 to 7, wherein the vertical integral of the horizontally summed disparity map is obtained by integrating over each column independently by the following equation:

$$VerInt(x, y) = \sum_{i=0}^{y} Hsum(x, i)$$

wherein the total disparity values are calculated for each pixel among the arbitrary support region by a subtraction of lower and upper bounds over the vertical integral data resulting in Sum(x,y),
wherein the total area of the arbitrary shaped support region for each pixel Area(x,y) is calculated by vertical and horizontal integral data,
and wherein the final disparity value for each pixel is calculated by normalising the sum value Sum(x,y) by the support area Area(x,y) by the equation

$$Disp(x, y) = \frac{Sum(x, y)}{Area(x, y)}$$

**Patentansprüche**

1. **Verfahren** des Bearbeitens von dreidimensionalen Bilddaten durch Hochrechnen (up- sampling) einer Tiefeninformation niedriger Auflösung, wobei die Tiefeninformation durch Homograph-Mapping zu Farbdaten eines Farbbilds hoher Auflösung registriert (gespeichert) wird, mit den folgenden aufeinanderfolgenden Schritten:

- Hochskalieren der Tiefeninformation niedriger Auflösung auf die Auflösung des Farbbilds hoher Auflösung durch eine Nächste-Nachbarn-Interpolation (10) zum Erhalten einer hochskalierten Disparitätskarte,
- Detektieren der horizontalen und vertikalen Grenzen für jedes Pixel des Farbbilds hoher Auflösung (20) auf Grundlage von Intensitätsdifferenzen, wobei innerhalb der Detektion eine Suche für jedes Pixel in vier Richtungen durchgeführt wird und die Suche fortgesetzt wird bis ein erstes Pixel erreicht wird, das die horizontale oder vertikale Grenze in korrespondierender Richtung definiert und dessen absolute Intensitätsdifferenz mit dem Zentralpixel oberhalb eines vorbestimmten Grenzwerts liegt,
- Kombinieren der hochskalierten Disparitätskarte und der detektierten vertikalen und horizontalen Grenzen (30) durch Anwenden eines Mittelungsfilters innerhalb eines beliebig geformten Bereichs, der bestimmt ist durch die Suche der vertikalen und horizontalen Grenze, die die Farbabweichung innerhalb des vorbestimmten Grenzwerts begrenzt, durch Nutzung von horizontalen und vertikalen Integraldaten der hochskalierten Disparitätskarte zum Erhalt einer Disparitätskarte hoher Auflösung, wobei der Mittelungsfilter eine Filterung innerhalb der hochskalierten Nächste-Nachbarn-Disparitätskarte durchführt durch Nutzung adaptiver Hilfsfenster, detektiert durch Bearbeiten der Farbbilder hoher Auflösung, wobei die adaptiven Hilfsfenster bestimmt werden durch Detektieren der vertikalen und horizontalen Grenzen jedes Pixels, wobei dann für jedes Pixel das Mitteln der Disparitätswerte innerhalb der detektierten Grenzen der benachbarten Pixel, die sich innerhalb der Grenzen der korrespondierenden Pixel befinden, durchgeführt wird.

2. Verfahren nach Anspruch 1, **dadurch gekennzeichnet, dass** das Mitteln der Disparitätswerte durchgeführt wird durch die Nutzung von Tabellen der summierten Fläche der hochskalierten Nächste-Nachbarn-Disparitätskarte in horizontaler und vertikaler Richtung.

3. Verfahren nach einem der vorstehenden Ansprüche, wobei das horizontale Integralbild der hochskalierten Nächste-Nachbarn-Disparitätskarte berechnet wird durch die Gleichung

$$HorInt(x, y) = \sum_{i=0}^{x} HighDisp(i, y)$$

wobei jede Zeile unabhängig behandelt wird und das Integral innerhalb konsekutiver Spalten ausgewertet wird und wobei für jedes Pixel die Summe von Disparitätswerten in horizontaler Richtung berechnet wird durch Nutzung des horizontalen Integralbilds und der horizontalen Grenzen nach der folgenden Gleichung:

$$HSum(x, y) = HorInt(RB(x, y), y) - HorInt(LB(x, y), y)$$

wobei LB linke Grenzen und RB rechte Grenzen sind.

4. Verfahren nach einem der vorstehenden Ansprüche, wobei das vertikale Integral der horizontal summierten Disparitätskarte erhalten wird durch Integrieren über jede Spalte unabhängig durch die folgende Gleichung:

$$VerInt(x, y) = \sum_{i=0}^{y} Hsum(x, i)$$

wobei die gesamten Disparitätswerte für jedes Pixel innerhalb des beliebigen Hilfsbereichs berechnet werden durch eine Subtraktion von unteren und oberen Grenzen über die vertikalen Integraldaten, ergebend Sum(x,y), wobei die gesamte Fläche des beliebig geformten Hilfsbereichs für jedes Pixel Area(x,y) berechnet wird durch vertikale und horizontale Integraldaten, und wobei der finale Disparitätswert für jedes Pixel berechnet wird durch Normalisieren des Summenwerts Sum(x, y) durch die Hilfsfläche Area(x,y) durch die Gleichung

$$Disp(x, y) = \frac{Sum(x, y)}{Area(x, y)}$$

5. Vorrichtung zum Bearbeiten dreidimensionaler Bilddaten durch Hochrechnen (up- sampling) einer Tiefeninformation niedriger Auflösung, wobei die Tiefeninformation durch Homograph-Mapping zu Farbdaten eines Farbbilds hoher Auflösung registriert (gespeichert) wird, mit

12

- einer Tiefenabschätzeinheit (103), die die Tiefeninformation niedriger Auflösung bereitstellt,
- einer Tiefenhochrecheneinheit (105), die die Tiefeninformation niedriger Auflösung der Tiefenabschätzeinheit (103) und korrespondierende Bilddaten hoher Auflösung kombiniert zum Erarbeiten einer Disparitätskarte hoher Auflösung, wobei die Tiefeninformationen niedriger Auflösung hochskaliert werden auf die Auflösung des Farbbilds hoher Auflösung durch eine Nächste-Nachbarn-Interpolation zum Erhalten einer hochskalierten Disparitätskarte,

wobei die horizontalen und vertikalen Grenzen für jedes Pixel eines Farbbilds hoher Auflösung auf Grundlage von Intensitätsdifferenzen detektiert werden, wobei innerhalb der Detektion eine Suche für jedes Pixel in vier Richtungen durchgeführt wird und die Suche fortgesetzt wird bis ein erstes Pixel erreicht wird, das die horizontale oder vertikale Grenze in korrespondierender Richtung definiert und dessen absolute Intensitätsdifferenz mit dem Zentralpixel oberhalb eines vorbestimmten Grenzwerts liegt, wobei die Tiefeninformation niedriger Auflösung mit dem Farbbild hoher Auflösung korrespondiert und wobei die hochskalierten Disparitätskarte und der detektierten vertikalen und horizontalen Grenzen kombiniert werden durch Anwenden eines Mittelungsfilters innerhalb eines beliebig geformten Bereichs, der bestimmt ist durch die Suche der vertikalen und horizontalen Grenze, die die Farbabweichung innerhalb des vorbestimmten Grenzwerts begrenzt, durch die Nutzung von horizontalen und vertikalen Integraldaten der hochskalierten Disparitätskarte zum Erhalten der Disparitätskarte hoher Auflösung, wobei der Mittelungsfilter eine Filterung innerhalb der hochskalierten Nächste-Nachbarn-Disparitätskarte durchführt durch Nutzung adaptiver Hilfsfenster, detektiert durch Bearbeiten der Farbbilder hoher Auflösung, wobei die adaptiven Hilfsfenster bestimmt werden durch Detektieren der vertikalen und horizontalen Grenzen jedes Pixels, wobei dann für jedes Pixel das Mitteln der Disparitätswerte innerhalb der detektierten Grenzen der benachbarten Pixel, die sich innerhalb der Grenzen der korrespondierenden Pixel befinden, durchgeführt wird.

6. Vorrichtung nach Anspruch 5, **dadurch gekennzeichnet, dass** das Mitteln der Disparitätswerte durchgeführt wird durch die Nutzung von Tabellen der summierten Fläche der hochskalierten Nächste-Nachbarn-Disparitätskarte in horizontaler und vertikaler Richtung.

7. Vorrichtung nach einem der Ansprüche 5 oder 6, wobei das horizontale Integralbild der hochskalierten Nächste-Nachbarn-Disparitätskarte berechnet wird durch die Gleichung

$$HorInt(x, y) = \sum_{i=0}^{x} HighDisp(i, y)$$

wobei jede Zeile unabhängig behandelt wird und das Integral innerhalb konsekutiver Spalten ausgewertet wird und wobei für jedes Pixel die Summe von Disparitätswerten in horizontaler Richtung berechnet wird durch Nutzung des horizontalen Integralbilds und der horizontalen Grenzen nach der folgenden Gleichung:

$$HSum(x, y) = HorInt(RB(x, y), y) - HorInt(LB(x, y), y)$$

wobei LB linke Grenzen und RB rechte Grenzen sind.

8. Vorrichtung nach einem der Ansprüche 5 bis 7, wobei das vertikale Integral der horizontalen summierten Disparitätskarte erhalten wird durch Integrieren über jede Spalte unabhängig durch die folgende Gleichung:

$$VerInt(x, y) = \sum_{i=0}^{y} Hsum(x, i)$$

wobei die gesamten Disparitätswerte für jedes Pixel innerhalb des beliebigen Hilfsbereichs berechnet werden durch eine Subtraktion von unteren und oberen Grenzen über die vertikalen Integraldaten, ergebend Sum(x,y), wobei die gesamte Fläche des beliebig geformten Hilfsbereichs für jedes Pixel Area(x,y) berechnet wird durch vertikale und horizontale Integraldaten, und wobei der finale Disparitätswert für jedes Pixel berechnet wird durch Normalisieren des Summenwerts Sum(x,y) durch die Hilfsfläche Area(x,y) durch die Gleichung

$$Disp(x, y) = \frac{Sum(x, y)}{Area(x, y)}$$

**Revendications**

1.  Procédé de traitement de données d'image tridimensionnelle par un sur-échantillonnage de données de profondeur de basse résolution, dans lequel lesdites données de profondeur sont enregistrées pour une donnée de couleur d'une image couleur à haute résolution par mappage d'homographe, comprenant les étapes successives suivantes :

    - le sur-échantillonnage des données de profondeur de basse résolution pour la résolution de ladite image couleur à haute résolution en utilisant une interpolation du voisin le plus proche (10) pour obtenir une carte de disparité sur-échantillonnée,
    - la détection de limites horizontale et verticale pour chaque pixel de ladite image couleur à haute résolution (20) sur la base de différences d'intensité, dans lequel, dans ladite détection, une recherche est effectuée pour chaque pixel dans quatre directions et ladite recherche continue jusqu'à ce qu'un premier pixel qui définit ladite limite horizontale ou verticale dans une direction correspondante et dont la différence d'intensité absolue avec le pixel central est au-dessus d'un seuil prédéterminé soit atteint,
    - la combinaison de la carte de disparité sur-échantillonnée et des limites verticale et horizontale détectées (30) en appliquant un filtre d'établissement de moyenne parmi une région de profil arbitraire qui est déterminée par la recherche de limites verticale et horizontale qui limite la variation de couleur dans les limites du seuil prédéterminé, par l'utilisation de données d'intégrale verticale et horizontale de la carte de disparité sur-échantillonnée pour obtenir une carte de disparité de haute résolution, dans lequel ledit filtre d'établissement de moyenne effectue un filtrage parmi la carte de disparité sur-échantillonnée du voisin le plus proche en utilisant des fenêtres de support adaptatives détectées par le biais du traitement des images couleur à haute résolution, dans lequel les fenêtres de support adaptatives sont déterminées en détectant les limites verticale et horizontale pour chaque pixel, dans lequel ensuite, pour chaque pixel, l'établissement de la moyenne des valeurs de disparité parmi les limites détectées des pixels voisins situées dans les limites des pixels correspondants est effectué.

2.  Procédé selon la revendication 1, **caractérisé en ce que** l'établissement de la moyenne des valeurs de disparité est effectué par l'utilisation de tables de zones additionnées de la carte de disparité sur-échantillonnée du voisin le plus proche en direction horizontale et verticale.

3.  Procédé selon une des revendications précédentes, dans lequel l'image d'intégrale horizontale de la carte de disparité sur-échantillonnée du voisin le plus proche est calculée par l'équation

$$HorInt(x, y) = \sum_{i=0}^{x} HighDisp(i, y)$$

    dans laquelle chaque ligne est traitée indépendamment et l'intégrale est évaluée parmi des colonnes consécutives, et dans laquelle, pour chaque pixel, la somme de valeurs de disparité en direction horizontale est calculée en utilisant l'image d'intégrale horizontale et les limites horizontales selon l'équation suivante:

$$HSum(x, y) = HorInt(RB(x, y), y) - HorInt(LB(x, y), y)$$

    dans laquelle LB sont des limites gauches et RB sont des limites droites.

4.  Procédé selon une des revendications précédentes, dans lequel l'intégrale verticale de la carte de disparité additionnée horizontalement est obtenue par intégration sur chaque colonne indépendamment par l'équation suivante :

$$VerInt(x, y) = \sum_{i=0}^{y} Hsum(x, i)$$

dans lequel les valeurs de disparité totales sont calculées pour chaque pixel parmi la région de support arbitraire par une soustraction de limites inférieur et supérieure sur les données d'intégrale verticale avec pour résultat Sum(x, y),

dans lequel la surface totale de la région de support de profil arbitraire pour chaque pixel Area(x, y) est calculée par des données d'intégrale verticale et horizontale,

et dans lequel la valeur de disparité finale pour chaque pixel est calculée en normalisant la valeur de somme Sum(x, y) par la surface de support Area(x, y) par l'équation

$$Disp(x, y) = \frac{Sum(x, y)}{Area(x, y)}$$

5. Dispositif de traitement de données d'image tridimensionnelle par un sur-échantillonnage de données de profondeur de basse résolution, dans lequel lesdites données de profondeur sont enregistrées pour une donnée de couleur d'une image couleur à haute résolution par mappage d'homographe, comprenant

- une unité d'estimation de profondeur (103) qui fournit les données de profondeur de basse résolution,
- une unité de sur-échantillonnage de profondeur (105) qui combine les données de profondeur de basse résolution de l'unité d'estimation de profondeur (103) et des données de couleur de haute résolution correspondantes pour traiter une carte de disparité de haute résolution, dans lequel les données de profondeur de basse résolution sont sur-échantillonnées pour la résolution de ladite image couleur à haute résolution en utilisant une interpolation du voisin le plus proche pour obtenir une carte de disparité sur-échantillonnée, dans lequel les limites horizontale et verticale pour chaque pixel dune image couleur à haute résolution sur la base de différences d'intensité sont détectées, dans lequel, dans ladite détection, une recherche est effectuée pour chaque pixel dans quatre directions et ladite recherche continue jusqu'à ce qu'un premier pixel qui définit ladite limite horizontale ou verticale dans une direction correspondante et dont la différence d'intensité absolue avec le pixel central est au-dessus d'un seuil prédéterminé soit atteint, dans lequel les données de profondeur de basse résolution correspondent à l'image couleur à haute résolution, et dans lequel la carte de disparité sur-échantillonnée et les limites verticale et horizontale détectées sont combinées en appliquant un filtre d'établissement de moyenne parmi une région de profil arbitraire qui est déterminée par la recherche de limites verticale et horizontale qui limite la variation de couleur dans les limites du seuil prédéterminé, par l'utilisation de données d'intégrale verticale et horizontale de la carte de disparité sur-échantillonnée pour obtenir une carte de disparité de haute résolution, dans lequel le filtre d'établissement de moyenne effectue un filtrage parmi la carte de disparité sur-échantillonnée du voisin le plus proche en utilisant des fenêtres de support adaptatives détectées par le biais du traitement des images couleur à haute résolution, dans lequel les fenêtres de support adaptatives sont déterminées en détectant les limites verticale et horizontale pour chaque pixel, dans lequel ensuite, pour chaque pixel, l'établissement de la moyenne des valeurs de disparité parmi les limites détectées des pixels voisins situées dans les limites des pixels correspondants est effectué.

6. Dispositif selon la revendication 5, **caractérisé en ce que** l'établissement de la moyenne des valeurs de disparité est effectué par l'utilisation de tables de zones additionnées de la carte de disparité sur-échantillonnée du voisin le plus proche en direction horizontale et verticale.

7. Dispositif selon la revendication 5 ou 6, dans lequel l'image d'intégrale horizontale de la carte de disparité sur-échantillonnée du voisin le plus proche est calculée par l'équation

$$HorInt(x, y) = \sum_{i=0}^{x} HighDisp(i, y)$$

dans laquelle chaque ligne est traitée indépendamment et l'intégrale est évaluée parmi des colonnes consécutives, et dans laquelle, pour chaque pixel, la somme de valeurs de disparité en direction horizontale est calculée en utilisant l'image d'intégrale horizontale et les limites horizontales selon l'équation suivante:

$$HSum(x, y) = HorInt(RB(x, y), y) - HorInt(LB(x, y), y)$$

dans laquelle LB sont des limites gauches et RB sont des limites droites.

8. Procédé selon l'une quelconque des revendications 5 à 7, dans lequel l'intégrale verticale de la carte de disparité additionnée horizontalement est obtenue par intégration sur chaque colonne indépendamment par l'équation suivante :

$$VerInt(x, y) = \sum_{i=0}^{y} Hsum(x, i)$$

dans lequel les valeurs de disparité totales sont calculées pour chaque pixel parmi la région de support arbitraire par une soustraction de limites inférieur et supérieure sur les données d'intégrale verticale avec pour résultat Sum(x, y),
dans lequel la surface totale de la région de support de profil arbitraire pour chaque pixel Area(x, y) est calculée par des données d'intégrale verticale et horizontale,
et dans lequel la valeur de disparité finale pour chaque pixel est calculée en normalisant la valeur de somme Sum(x, y) par la surface de support Area(x, y) par l'équation

$$Disp(x, y) = \frac{Sum(x, y)}{Area(x, y)}$$

**10**

Figure – 1

Figure – 2

Figure – 3

Figure – 4

**4**

Figure – 5

Figure – 6

Figure – 7

**EP 2 466 901 B1**

**Patent documents cited in the description**

- US 2010110070 A1
- US 20080267494 A1